# EUROPEAN PATENT APPLICATION

(11) **EP 4 542 085 A1**
(43) Date of publication of application: **23.04.2025**
(21) Application number: 24206758.5
(22) Date of filing: 15.10.2024
(51) Int. Cl.: F16H 55/17

(54) **GEAR WHEEL WITH HELICAL TEETH AND METHOD FOR MANUFACTURING THEREOF**

(30) Priority: 20.10.2023 IT 202300022023
(71) Applicant: FPT Industrial S.p.A., 10156 Torino (IT)
(72) Inventor: COLACITO, Emanuele, 10156 Torino (IT); GALLIANO, Luca, 10156 Torino (IT); HADAYAT, AshadUllah, 10156 Torino (IT)
(74) Representative: Fiume, Orazio

(57) **Abstract**

Gear wheel with helical teeth comprising a ring gear (KR) with helical teeth, a shaft (SH) supporting the ring gear and characterised by the fact that it comprises a pair of rings (W1, W2) arranged to associate the ring gear to the relative shaft, and by the fact that the two rings of the pair of rings are mutually spaced defining a toroidal gap (H) .

## Description

### Field of the invention

The present invention relates to the field of helical toothed gears and method of manufacturing the same.

### State of the art

Large diameter gears are often designed as a ring gear supported by a web arranged at the center of the axial development of the ring gear.

A web has the shape of a toroidal disk.

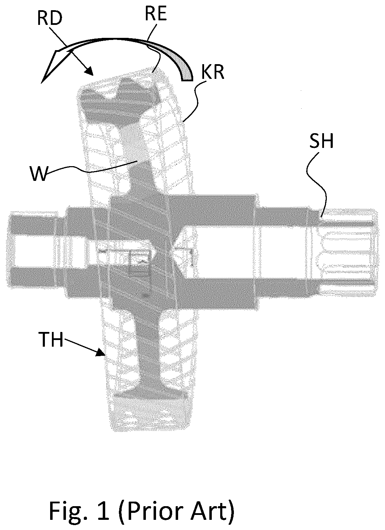

As long as the teeth are straight, i.e. parallel to the rotation axis of the gear, there are no particular problems. However, when the teeth are helical, an axial component is determined among the exchanged forces that causes a tilting deformation of the ring gear in the direction of the rotation axis, as shown in figure 1. As a consequence, a meshing misalignment is determined between the gear teeth with a concentration of the contact in a limited area of the tooth surface that leads to increased stress and noise.

Fig. 1 shows, in detail, a gear wheel RD comprising an annular ring gear KR, provided with oblique teeth TH, supported by a web W central to the axial development of the annular ring gear KR.

Fig. 1 shows an axial section of a gear wheel with a relative shaft. In particular, the effect of the combination of forces on the gear wheel RD is shown in an amplified manner. This effect causes the wheel to bend or overturn with a consequent displacement and localization of the contact between the sides of the

This concentration of contact between the teeth of the mesh determines a reduction in the fatigue life of the component and a significant increase in the noise of the system.

It must be considered that the interface portion between the web W and the shaft SH must be sufficiently robust to avoid fatigue failure of the same.

All this also entails a substantial impossibility in reducing the weight of the gear wheel and its shaft.

Unless specifically excluded in the detailed description that follows, what is described in this chapter is to be considered as an integral part of the detailed description.

### Summary of the invention

The purpose of the present invention is to present a gear wheel that limits the problems of the prior art. In particular, it is desired to reduce the overturning of the wheel itself due to the exchange of forces with another gear wheel arranged to mesh with the one object of the present invention.

The basic idea of the present invention is to create a pair of rings associated with the gear ring so as to be mutually spaced.

Preferably, the two rings of the pair are associated with the gear ring at the ends, in the axial direction, of the ring.

Advantageously, according to an axial section of the gear wheel, a box-shaped body is created that is much more resistant to the axial component.

Furthermore, the deformation that occurs in the box-shaped body is such as to create a translation of the portion of the gear ring, which does not determine the localized concentration of the contact between the meshed teeth.

This translation is partially in the axial direction and partially in the radial direction. The deformation in the radial direction can be easily compensated by an appropriate dimensioning of the teeth, while the deformation in the axial direction is irrelevant since the effect obtained is a reduction of the useful contact surface between the teeth that can be easily calculated and compensated in the design phase.

The dependent claims describe preferred variants of the invention, forming an integral part of this description.

### Brief description of the figures

Further purposes and advantages of the present invention will be made clear by the detailed description that follows of an example of its embodiment (and its variants) and by the attached drawings given purely for explanatory and non-limiting purposes, in which:
- Fig. 1 discloses an axial section of a gear wheel with helical teeth and a relative support shaft, deformed so as to highlight a tilting deformation of a contact portion of the gear ring in the direction of the rotation axis;
- Fig. 2 discloses an axial section of a gear wheel with helical teeth according to the present invention;
- Fig. 3 discloses an axial section of Fig. 2, deformed so as to highlight a translational deformation of a contact portion of the gear ring.

The same numbers and the same reference letters in the figures identify the same elements or components or functions.

It should also be noted that the terms "first", "second", "third", "upper", "lower" and the like may be used herein to distinguish various elements. These terms do not imply a spatial, sequential or hierarchical order for the modified elements unless specifically indicated or inferred from the text.

The elements and features illustrated in the various preferred embodiments, including the drawings, may be combined with each other without departing from the scope of protection of the present application as described below.

### Detailed description

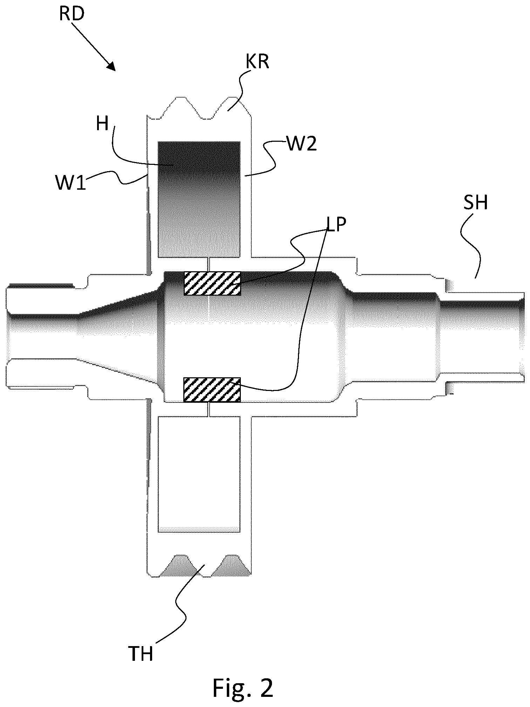

Fig. 2 shows an example of a gear wheel according to the present invention according to an axial section of the same.

The gear ring is completely similar to that of the prior art shown in Fig. 1. However, it is not supported by a central plate, according to the axial direction, but by a pair of plates W1 and W2 spaced axially from each other so as to define a toroidal gap H contained radially between the shaft SH and the gear ring KR and contained axially between the two plates W1, W2.

For convenience, where possible, the same reference signs used in figure 1 of the prior art have been maintained.

Preferably, as can be seen in the figure, the two plates are associated with the ends, in the axial direction, of the gear ring KR, so as to maximize the resistance to overturning. This means that the plates are arranged in correspondence with the extreme edges of the ring KR and the two opposite faces of the gear wheel are completely flat.

Advantageously, the sum of the thicknesses of the two rings W1, W2 can be less than the thickness of the ring W of the prior art gear without compromising the functionality and robustness of the gear itself.

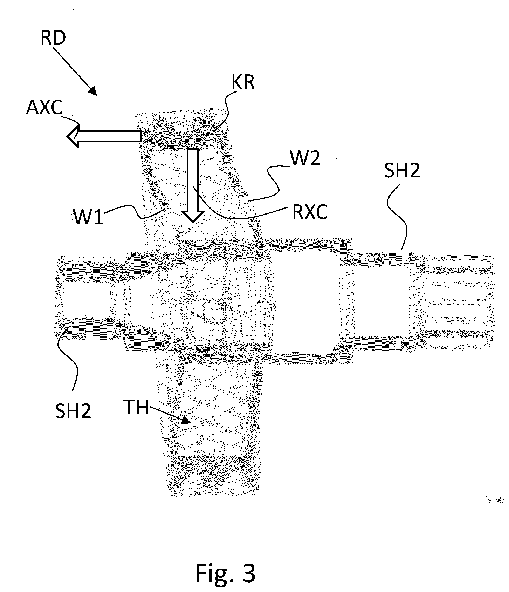

Fig. 3 shows a finite element simulation of a gear wheel according to the present invention subjected to the same stress as the prior art wheel.

It is clearly seen that the contact portion of the crown KR does not undergo a tilting effect, or it is negligible. As anticipated above, this contact portion undergoes a deformation that causes it to translate partly axially and partly radially with respect to the rotation axis of the wheel itself, respectively according to the two components AXC and RXC.

In addition to the advantage of having substantially eliminated the overturning effect, there is also a further advantage: the two webs W1 and W2 having a thickness less than half the thickness of an equivalent web W of the prior art, are proportionally more elastic and therefore the stresses that are reflected in the attachment of the webs on the SH shaft are significantly reduced.

Preferably, the toroidal-shaped webs can have a greater thickness at the maximum circumference corresponding to the attachment with the crown and at the minimum circumference corresponding to the attachment with the shaft SH and a lower thickness in an intermediate circumference between the maximum and minimum circumference.

This means that the shaft itself can be lightened by hollowing it out inside.

According to a preferred aspect of the present invention, the shaft is made in two portions SH1, SH2 coupled together in the axial direction.

The two webs can be made in a single piece with a respective portion of the shaft SH or they can be made separately and welded onto a respective portion of the shaft SH.

The toothed crown KR can be made separately from the webs and associated with them by welding with or without filler material.

To simplify the centering of the two portions, one of the two can be equipped with an internal lip intended to fit into the other portion of the shaft. Alternatively, the lip can be made by turning a single piece or it can be associated with one of the two portions of the shaft by welding or by interfering coupling.

As can be seen from the comparison of Figs. 1 and 2, the shaft of Fig. 2 SH is significantly hollowed out inside. However, this result cannot be obtained using the same FEM checks since a thinning of the shaft walls in a configuration such as that of the prior art requires significantly thickening the web W or in the absence of modifications to the web there is a risk that it will detach from the shaft due to fatigue failure, tearing its perimeter surface.

Therefore, according to a preferred aspect of the present invention, a gear wheel is made by the following steps:
- Manufacturing of a gear ring KR with helical teeth,
- Manufacturing of a shaft SH,
- Connection of the gear ring to the shaft by means of a pair of webs W1, W2, spaced apart from each other.

The manufacturing of the shaft comprises making two axial portions SH1, SH2 of the shaft and working them internally so as to empty them and a subsequent step of associating the two portions axially to form a single shaft SH. Preferably, one of the two portions is hollowed out internally so as to define a centering lip LP and the axial association step of the two portions SH1, SH2 comprises the fact of inserting the centering lip of a portion, inside the other portion.

There are possible embodiments of the non-limiting example described, without however departing from the scope of protection of the present invention, including all the embodiments equivalent for a technician in the field, to the content of the claims.

From the description reported above, the technician in the field is able to realize the object of the invention without introducing further construction details.

## Claims

1. Gear wheel with helical teeth comprising a gear ring (KR) with helical teeth, a shaft (SH) supporting the gear ring and **characterised by** comprising a pair of rings (W1, W2) arranged to associate the gear ring to the relative shaft, and by the fact that the two rings of the pair of rings are mutually spaced defining a toroidal gap (H).

2. Wheel according to claim 1, wherein said two rings are associated with opposite ends according to an axial direction, of the gear ring (KR).

3. Wheel according to claim 2, wherein the opposite faces are completely flat.

4. Wheel according to claim 1 - 3, wherein said shaft is formed by two axial portions (SH1, SH2) associated with each other and wherein a first portion (SH1) is integral with a first flange (W1) and a second portion (SH2) is integral with a second flange (W2).

5. Wheel according to claim 4, wherein one of said first portion and said second portion comprises a centering lip (LP) with the other portion.

6. A method of manufacturing a gear wheel with helical teeth comprising the following steps:
- Manufacturing of a gear ring (KR) with helical teeth,
- Manufacturing of a shaft (SH),
- Connecting the gear ring to the shaft by means of a pair of flanges (W1, W2), spaced apart from each other.

7. Method according to claim 6, wherein said manufacturing of the shaft comprises making two axial portions (SH1, SH2) of the shaft and machining them internally so as to hollow them out and a subsequent step of associating the two portions axially to form a single shaft (SH).
